(19) Europäisches Patentamt
European Patent Office
Office européen des brevets

(11) **EP 1 978 737 A2**

(12) **EUROPEAN PATENT APPLICATION**

(43) Date of publication:
**08.10.2008 Bulletin 2008/41**

(51) Int Cl.:
***H04N 7/01*** (2006.01)

(21) Application number: **08004561.0**

(22) Date of filing: **12.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **27.03.2007 JP 2007082613**

(71) Applicant: **Kabushiki Kaisha Toshiba**
**Minato-ku,**
**Tokyo 105-8001 (JP)**

(72) Inventors:
• **Mishima, Nao**
  **Tokyo (JP)**
• **Takeyama, Yasutoyo**
  **Tokyo (JP)**
• **Itoh, Goh**
  **Tokyo (JP)**

(74) Representative: **HOFFMANN EITLE**
**Patent- und Rechtsanwälte**
**Arabellastrasse 4**
**81925 München (DE)**

(54) **Frame interpolation apparatus and method**

(57)    A first motion vector points from a source region of a source picture to a destination region of a destination picture. A second motion vector is scaled from the first motion vector based on a first temporal distance between the source picture and the interpolation picture. A third motion vector is scaled from the first motion vector based on a second temporal distance between the destination picture and the interpolation picture. A weight of a first interpolation region of the interpolation picture is calculated using distortion energy of the source region. A first motion compensation picture compensated from the source region to a temporal position of the interpolation picture using the second motion vector, and a second motion compensation picture compensated from the destination region to the temporal position using the third motion vector are calculated. A third motion compensation picture is calculated by weighted-averaging the first motion compensation picture and the second motion compensation picture. A second interpolation region of the interpolation picture is calculated by averaging a region of the third motion compensation picture and a region of an artifact prevention picture with the weight.

FIG. 1

**Description**

**FIELD OF THE INVENTION**

The present invention relates to a frame interpolation apparatus and a method for interpolating a new frame between frames of an input motion picture.

**BACKGROUND OF THE INVENTION**

As a general method for generating an interpolation frame, a motion vector (flow) between frames is calculated by estimating a motion between the frames. The interpolation frame is generated by motion compensation using the motion vector. However, in this method, if the flow is erroneously estimated, artifacts occur.
Next, a technique to overcome the above defect is disclosed in JP-A No. 2005-6275 (Patent reference 1) . As to this technique, in case of decoding a (encoded) motion picture, a distribution, a direction, and a DCT coefficient of flows (motion vectors) in an entire frame are calculated. A reliance of the flows in the entire frame is estimated by the distribution, the direction and the DCT coefficient. Based on the reliance, interpolation/non-interpolation of a new frame is controlled. In case of low reliance, the new frame is not interpolated. In this case, artifacts can be suppressed.
However, in the Patent reference 1, interpolation/non-interpolation of the new frame is controlled based on statistic quantity of the entire frame. Accordingly, it is difficult to cope with local artifacts in the frame. Furthermore, change of interpolation/non-interpolation is frequently executed for the entire frame. Accordingly, this frequent change is visually recognized as a flicker, and new artifacts occur.

**SUMMARY OF THE INVENTION**

The present invention is directed to a frame interpolation apparatus and a method for smoothing motion pictures by interpolating a new frame between frames of the motion pictures.
According to an aspect of the present invention, there is provided an apparatus for generating an interpolation picture between a source picture and a destination picture, comprising: a motion estimation unit configured to calculate a first motion vector from a source region of the source picture to a destination region of the destination picture, a second motion vector scaled from the first motion vector based on a first temporal distance between the source picture and the interpolation picture, and a third motion vector scaled from the first motion vector based on a second temporal distance between the destination picture and the interpolation picture; a distortion energy calculation unit configured to calculate a distortion energy of the source region, the distortion energy being smaller when a difference between a pixel value of a pixel of the source region and a pixel value of a corresponding pixel of the destination region is smaller; a weight calculation unit configured to calculate a first weight of a first interpolation region of the interpolation picture using the distortion energy of the source region, the first interpolation region being pointed from the source region by the second motion vector; a motion compensation picture generation unit configured to generate a first motion compensation picture by compensating the source region to a temporal position of the interpolation picture using the second motion vector, a second motion compensation picture by compensating the destination region to the temporal position using the third motion vector, and a third motion compensation picture by averaging the first motion compensation picture and the second motion compensation picture with the first temporal distance and the second temporal distance; an artifact prevention picture generation unit configured to generate an artifact prevention picture selected from the source picture, the destination picture, and a temporal weighted average picture, the temporal weighted average picture being generated by averaging the source picture and the destination picture with the first temporal distance and the second temporal distance; and a picture interpolation unit configured to generate a second interpolation region of the interpolation picture by averaging a region of the third motion compensation picture and a region of the artifact prevention picture, each corresponding to the second interpolation region with the first weight.
According to another aspect of the present invention, there is also provided a apparatus for generating an interpolation picture between a source picture and a destination picture, comprising: a motion estimation unit configured to calculate a first motion vector from a source region of the source picture to a destination region of the destination picture, a second motion vector scaled from the first motion vector based on a first temporal distance between the source picture and the interpolation picture, and a third motion vector scaled from the first motion vector based on a second temporal distance between the destination picture and the interpolation picture; a distortion energy calculation unit configured to calculate a distortion energy of the source region, the distortion energy being smaller when a difference between a pixel value of a pixel of the source region and a pixel value of a corresponding pixel of the destination region is smaller; a weight calculation unit configured to calculate a first weight of a first interpolation region of the interpolation picture using the distortion energy of the source region, the first interpolation region being pointed from the source region by the second motion vector; a motion compensation picture generation unit configured to generate a first motion compensation picture by compensating the source region to a temporal position of the interpolation picture using the second motion vector, a second motion compensation picture by compensating the destination region to the temporal position using the third motion vector, and a third motion compensation picture by averaging the first motion compensation picture and the second motion compensation picture with the first temporal distance and the second temporal distance; an artifact prevention picture generation unit configured to generate an artifact prevention picture using a global motion vector of a vector extraction region of the source picture, the global motion vector representing geometrical transformation from the source picture to the destination picture; and a picture interpolation unit configured to generate a second interpolation region of the interpolation picture by averaging a region of the third motion compensation picture and a region of the artifact prevention picture, each corresponding to the second interpolation region with the first weight.

According to still another aspect of the present invention, there is also provided a method for generating an interpolation picture between a source picture and a destination picture, comprising: calculating a first motion vector from a source region of the source picture to a destination region of the destination picture, a second motion vector scaled from the first motion vector based on a first temporal distance between the source picture and the interpolation picture, and a third motion vector scaled from the first motion vector based on a second temporal distance between the destination picture and the interpolation picture; calculating a distortion energy of the source region, the distortion energy being smaller when a difference between a pixel value of a pixel of the source region and a pixel value of a corresponding pixel of the destination region is smaller; calculating a first weight of a first interpolation region of the interpolation picture using the distortion energy of the source region, the first interpolation region being pointed from the source region by the second motion vector; generating a first motion compensation picture by compensating the source region to a temporal position of the interpolation picture using the second motion vector, a second motion compensation picture by compensating the destination region to the temporal position using the third motion vector, and a third motion compensation picture by averaging the first motion compensation picture and the second motion compensation picture with the first temporal distance and the second temporal distance; generating an artifact prevention picture selected from the source picture, the destination picture, and a temporal weighted average picture, the temporal weighted average picture being generated by averaging the source picture and the destination picture with the first temporal distance and the second temporal distance; and generating a second interpolation region of the interpolation picture by averaging a region of the third motion compensation picture and a region of the artifact prevention picture, each corresponding to the second interpolation region with the first weight.

According to still another aspect of the present invention, there is also provided a method for generating an interpolation picture between a source picture and a destination picture, comprising: calculating a first motion vector from a source region of the source picture to a destination region of the destination picture, a second motion vector scaled from the first motion vector based on a first temporal distance between the source picture and the interpolation picture, and a third motion vector scaled from the first motion vector based on a second temporal distance between the destination picture and the interpolation picture; calculating a distortion energy of the source region, the distortion energy being smaller when a difference between a pixel value of a pixel of the source region and a pixel value of a corresponding pixel of the destination region is smaller; calculating a first weight of a first interpolation region of the interpolation picture using the distortion energy of the source region, the first interpolation region being pointed from the source region by the second motion vector; generating a first motion compensation picture by compensating the source region to a temporal position of the interpolation picture using the second motion vector, a second motion compensation picture by compensating the destination region to the temporal position using the third motion vector, and a third motion compensation picture by averaging the first motion compensation picture and the second motion compensation picture with the first temporal distance and the second temporal distance; generating an artifact prevention picture using a global motion vector of a vector extraction region of the source picture, the global motion vector representing geometrical transformation from the source picture to the destination picture; and generating a second interpolation region of the interpolation picture by averaging a region of the third motion compensation picture and a region of the artifact prevention picture, each corresponding to the second interpolation region with the first weight.

## BRIEF DESCRIPTION OF THE DRAWINGS

Fig. 1 is a block diagram of a frame interpolation apparatus according to a first embodiment.
Fig.2 is a flow chart of general processing according to the first embodiment.
Fig.3 is a flow chart of calculation of distortion energy according to the first embodiment.
Fig. 4 is a flow chart of generation of an image for preventing artifacts according to the first embodiment.
Fig.5 is a flow chart of generation of an alpha map according to the first embodiment.
Fig.6 is a flow chart of warping of motion compensation according to the first embodiment.
Fig. 7 is a flow chart of alpha blending according to the first embodiment.

Fig.8 is a flow chart of calculation of distortion energy according to a second embodiment.

Fig. 9 is a block diagram of the frame interpolation apparatus according to a third embodiment.

Fig. 10 is a schematic diagram of flows having low accuracy.

Fig. 11 is a schematic diagram of an alpha map generated from the flows in Fig. 10.

Fig.12 is a block diagram of the frame interpolation apparatus according to a fourth embodiment.

Fig.13 is a flow chart of k-means clustering according to the fourth embodiment.

Fig.14 is a schematic diagram of extraction processing of a global motion according to the fourth embodiment.

## DETAILED DESCRIPTION OF THE EMBODIMENTS

Hereinafter, various embodiments of the present invention will be explained by referring to the drawings. The present invention is not limited to the following embodiments.

(First embodiment)

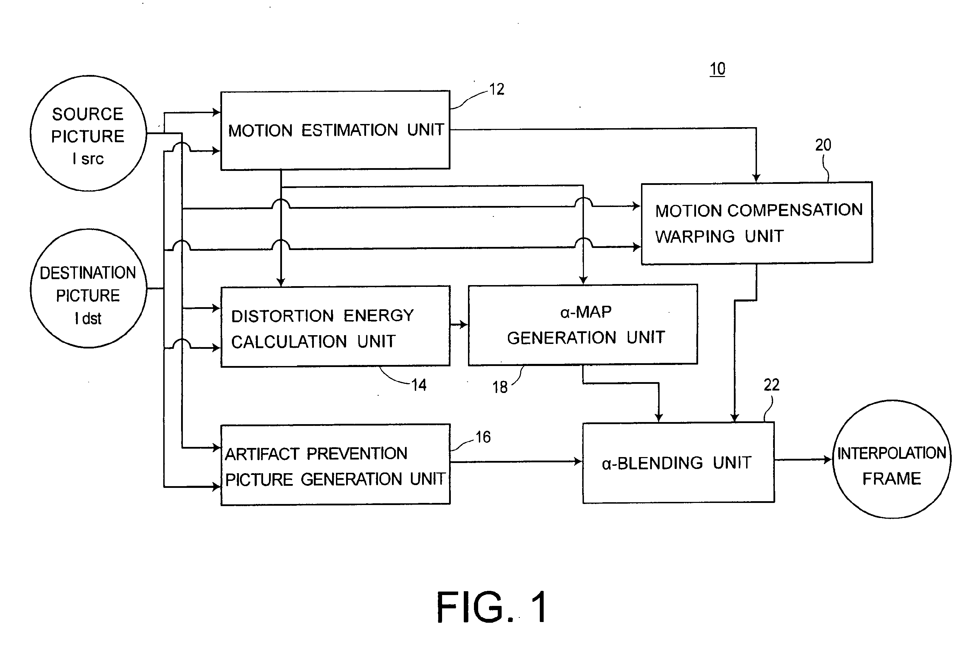

A frame interpolation apparatus 10 of the first embodiment is explained by referring to Figs. 1~7. In the frame interpolation apparatus 10, in case of inputting a motion picture, a new (interpolation) frame is interpolated between two (object) frames. By increasing a number of frames per unit time, the motion picture is smoothed. As to the motion picture, irrespective of resolution, size, frame rate, and the number of interpolation frames, the present embodiment can be applied.

(1) Summary of the frame interpolation apparatus 10:

Fig. 1 is a block diagram of the frame interpolation apparatus 10 of the first embodiment. As to the frame interpolation apparatus 10, during or after inputting a source picture $I_{src}$ and a destination picture $I_{dst}$, an interpolation frame is generated at pixel-level. The frame interpolation apparatus 10 includes a motion estimation unit 12, a distortion energy calculation unit 14, an artifact prevention image generation unit 16, an alpha map generation unit 18, a motion compensation warping unit 20, and an alpha blending unit 22.

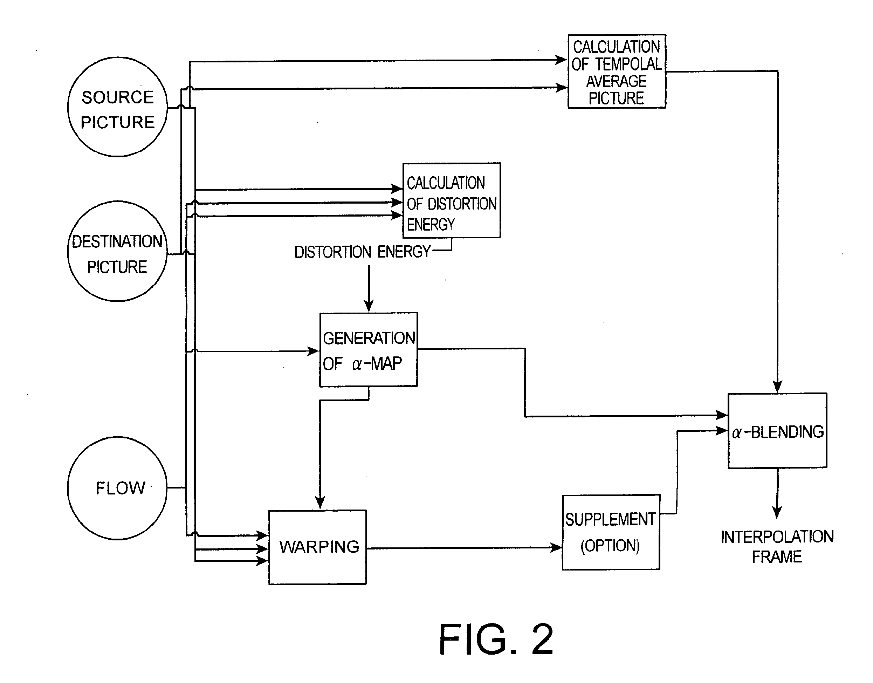

As shown in Fig.2, the frame interpolation apparatus 10 locally calculates a reliance degree of flow based on a source picture, a destination picture, and an estimated flow. By warping the reliance degree onto a temporal position of an interpolation frame using the flow, the reliance degree is converted to an alpha $(\alpha)$ -value, and an alpha $(\alpha)$ -map is generated. By blending a motion compensation picture and an artifact prevention picture using the alpha-value, local artifacts (a corrupted picture) can be removed.

(2) A motion estimation unit 12:

A flow estimation method of the motion estimation unit 12 is, for example, a block matching method, an optical flow method, a Pel-recursive method, and a Bayesian method. In the first embodiment, the block matching method is explained. However, the flow estimation method is not limited to the block matching method. The optical flow method, the Pel-recursive method, or the Bayesian method may be used.

First, a source picture is divided into blocks each having a rectangular region as follows.

$$\mathbf{B(i)} = \{\mathbf{i+(x,y)^T}|\ 0 \leqslant \mathbf{x} \leqslant \mathbf{M_1},\ 0 \leqslant \mathbf{y} \leqslant \mathbf{M_2}\}$$

$i \in X$: left upper point of block
$M_1$, $M_2$: x size and y size of block
$X \subset \Lambda^2$: frame

A block matching algorithm based on SSD (Sum of Squared Difference) is represented as follows.

$$\mathbf{u(i)} = \arg\min_{u \in W} \mathbf{E(i,u)} \equiv \sum_{x \in B(i)} (\mathbf{I_{dst}(i+u+x)} - \mathbf{I_{src}(i+x)})^2 \qquad (1)$$

$W \subset X$: region for motion search

u (i) $\in$ X: flow of block i

As to the block matching, assume that each pixel in the same block has the same flow. The flow of each pixel is represented as follows.

$$u(i+x) \equiv u(i), \quad \forall x \in B(i) \qquad (2)$$

(3) A distortion energy calculation unit 14:

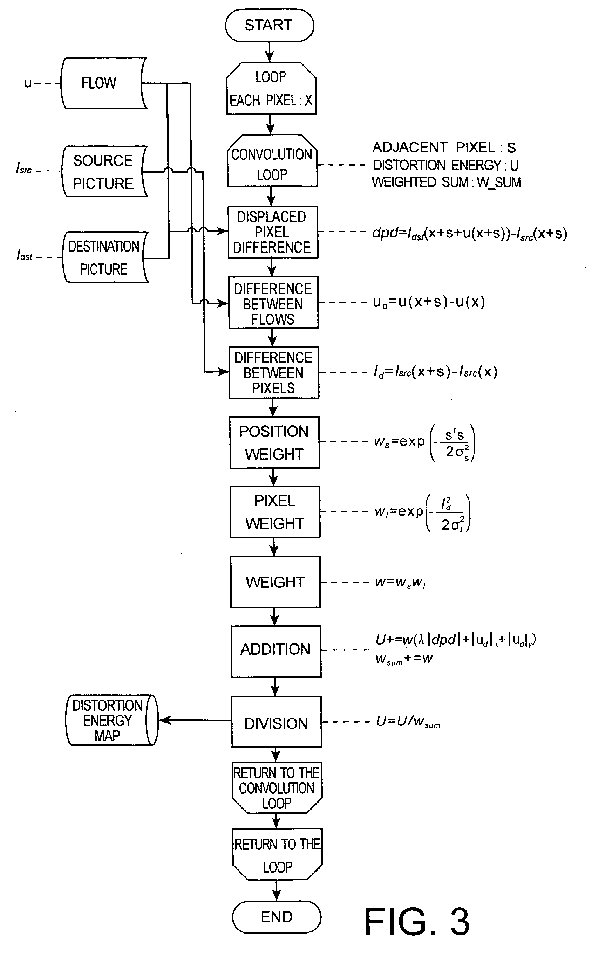

Next, the distortion energy calculation unit 14 is explained by referring to a flow chart of Fig.3. The distortion energy calculation unit 14 calculates distortion energy of each pixel.

(3-1) The first distortion energy:

Assume that a brightness of each pixel is constant over frames along motion. Following equation is concluded.

$$I_{dst}(x+u(x)) = I_{src}(x)$$

A displaced pixel difference (a difference between a brightness of a pixel of a source picture and a brightness of a flowed pixel of a destination picture) is represented as follows.

$$dpd(x) = I_{dst}(x+u(x)) - I_{src}(x)$$

The smaller the displaced pixel difference is, the higher a reliance degree of a flow is. Accordingly, the reliance degree is defined by distortion energy of the displaced pixel difference as follows.

$$D(x) = dpd(x)^2$$

However, if the reliance degree is calculated for only one pixel, the one pixel is affected by noise, and reliability of the reliance degree of the one pixel is not high. Accordingly, a first distortion energy by convoluting displaced pixel differences of adjacent pixels is calculated as follows.

$$U(x) = \sum_{s \in N(x)} D(x+s) \qquad (3)$$

The smaller the first distortion energy is, the higher the reliance degree is. In this equation, "N (x) $\subset$ X" is a set of pixels adjacent to the pixel x. For example, nine pixels or twenty five pixels including the pixel x is the set N(x).

(3-2) The second distortion energy:

Even if the first distortion energy (displaced pixel difference energy) is small, if flows of other pixels adjacent to the pixel x disperse in space, an interpolation frame may be locally poor. Accordingly, a smoothing energy of the flows of the other pixels is calculated as follows.

$$V(x,s) = \|u(x+s) - u(x)\|^2$$

The nearer each flow of the other pixel is, the lower the smoothing energy is. Briefly, the lower the smoothing energy is, the smoother the space is. In other words, the flow is more reliable.

(3-3) An extended distortion energy:

The first distortion energy (displaced pixel difference energy) is extended by considering the second distortion energy (smoothing energy) as follows.

$$U(x) = \sum_{s \in N(x)} \lambda D(x+s) + V(x,s) \qquad (4)$$

In equation (4), "λ>=0" represents a hyper parameter to attach importance to which of the displaced pixel difference and the smoothing. By the extended distortion energy, a flow having small displaced pixel difference and smoothing in space is decided as high reliable degree.

Above equations are defined as L2 norm. However, they may be defined as L1 norm, i.e., an absolute value as follows.

$$D(x) = |dpt(x)|$$

$$V(x,s) = |u(x+s) - u(x)| + |v(x+s) - v(x)|$$

$$U(x) = (u(x), v(x))^T$$

u, v: x coordinate, y coordinate of vector u

(3-4) In case of weighting:

Above convolution has no problem in case that the other pixels adjacent to the pixel x has almost same motion. However, in case that the other pixels include a boundary between a first motion and a second motion, a distortion occurs in an interpolated frame. Accordingly, weighting may be operated by similarity between pixels as follows.

$$U(x) = \sum_{s \in N(x)} w(x,s) \{ \lambda D(x+s) + V(x,s) \} \qquad (5)$$

$$w(x,s) = k_{\sigma_S}(s(k_{\sigma_I}(I_{src}(x+s) - I_{src}(x)))$$

$$k_\sigma(z) = \exp\left(-\frac{Z^T Z}{2\sigma^2}\right)$$

$k_\sigma(z)$: normal distribution function of standard deviation $\sigma$
$\sigma_s$, $\sigma_I$: standard deviations of adjacent space kernel and similarity kernel

In the second equation of equations (5), the first term of the right side represents weight of Gaussian in space kernel. Briefly, a center pixel of the kernel has the largest weight. The second term of the right side represents similarity kernel. The nearer two pixels are located to each other on the picture, the larger the weight of the two pixels is. Accordingly, a region of pixels having the same motion is only convoluted. As a result, if only a boundary of the region of pixels having the same motion overlaps an edge of the picture, convolution of another region of pixels having different motion can be avoided.

(4) The artifact prevention picture generation unit 16:

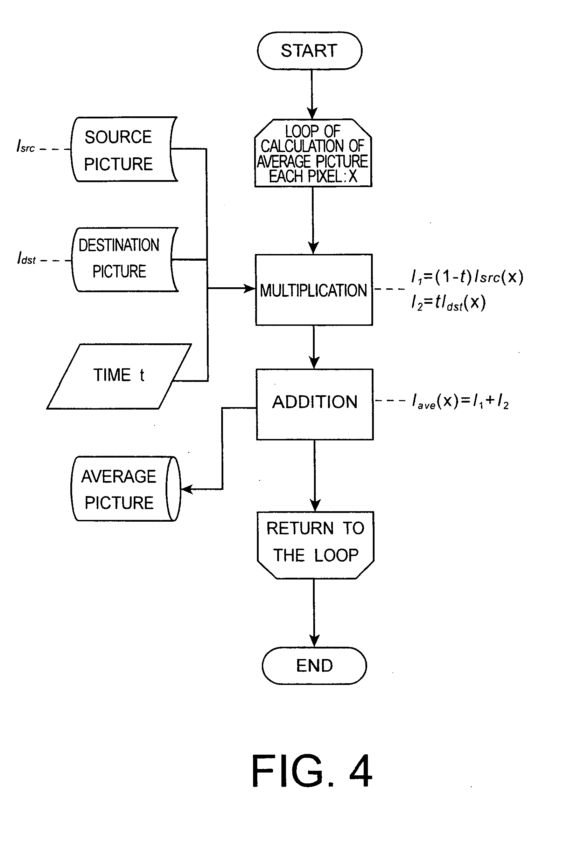

Next, the artifact prevention picture generation unit 16 is explained by referring to a flow chart of Fig. 4. The artifact prevention picture generation unit 16 uses an artifact prevention picture as an interpolation frame instead of unreliable flow region.

As the interpolation frame, a temporal weighted average picture of adjacent frames (a source frame, a destination frame) is used. If an interpolation temporal position of the interpolation frame is "0=<t=<1", the temporal weighted average picture is calculated as follows.

$$I_t(x) = (1-t)I_{src}(x) + tI_{dst}(x)$$

The temporal weighted average picture has visually few entropy and excellent quality. However, the source picture $I_{src}$ or the destination picture $I_{dst}$ may be used as the interpolation frame.

Furthermore, a normal average (not the weighted average) may be used as follows.

$$I_t(x) = 0.5I_{src}(x) + 0.5I_{dst}(x)$$

(5) The alpha-map generation unit 18:

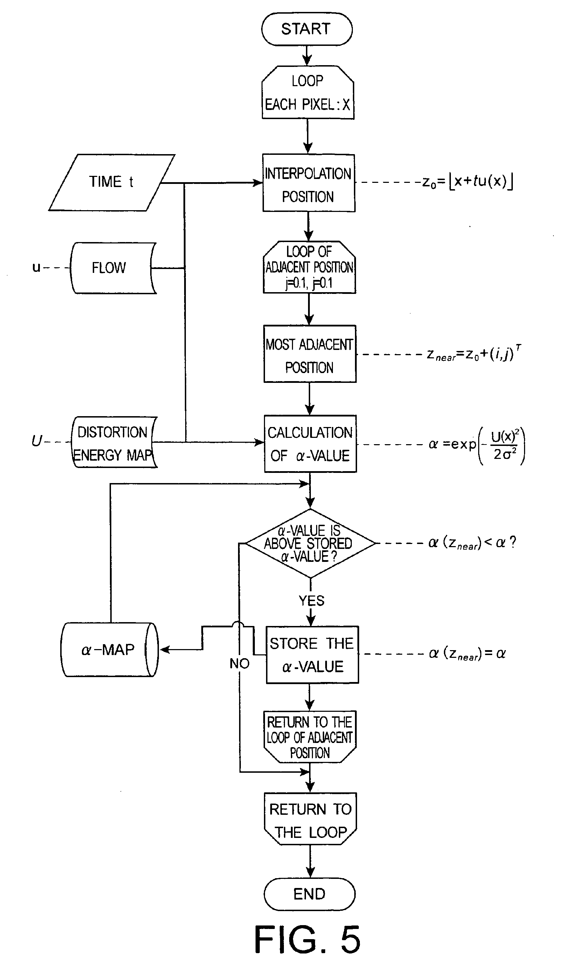

Next, the alpha-map generation unit 18 is explained by referring to a flow chart of Fig.5.

(5-1) Calculation of alpha-value:

The alpha-map generation unit 18 generates an alpha-map, i.e., a reliance map. The alpha-map has a coefficient of each pixel used for alpha-blending. An alpha-value (a reliance degree) as the coefficient has a range "0~1" and the same size as the source picture.

The distortion energy U (x) is defined as a real number above "0" . The smaller the distortion energy is, the higher the reliance degree is. As to a region having high reliance degree, a motion compensation picture (based on flow) should be preferentially used for alpha-blending. Briefly, as to a region having small distortion energy, the alpha-value is nearly set to "1". As to a region having large distortion energy, the alpha-value is nearly set to "0".

Accordingly, by following normal distribution function, the distortion energy U(x) is converted to the alpha-value having range "0~1".

$$\alpha(x) = \exp\left(-\frac{U(x)^2}{2\sigma^2}\right) \qquad (6)$$

σ : standard deviation of conversion

In equation (6), if σ is smaller, the reliance degree is easily decided to be low. Furthermore, logistic mapping may be used as follows.

$$\alpha(x) = \frac{1}{1 + \exp(a(U(x) - b))} \qquad (7)$$

a>0, b>0: parameter to determine conversion shape

(5-2) Shift of position:

The distortion energy is calculated at the same temporal position as the source picture. Accordingly, a temporal position of the alpha-map need be shifted. The temporal position is shifted by a flow. If a temporal position t of the interpolation frame is "0=<t=<1", the temporal position is represented as follows.

$$\mathbf{Z_0} = \lfloor x + tu(x) \rfloor \qquad (8)$$

$\lfloor x \rfloor$ : operator (omission) to integer x-element and $\gamma$-element of x

Plural alpha-values often overlap on the same region of the alpha-map by shifting. In this case, a higher alpha-value is preferentially used because a reliance degree of the higher alpha-value is higher than a reliance degree of a lower alpha-value. Furthermore, the x-element and y-element are omitted by the operator. In order to guarantee omission of the x-element and y-element, the x-element and the y-element may be locally repeated by shifting.

(6) The motion compensation warping unit 20:

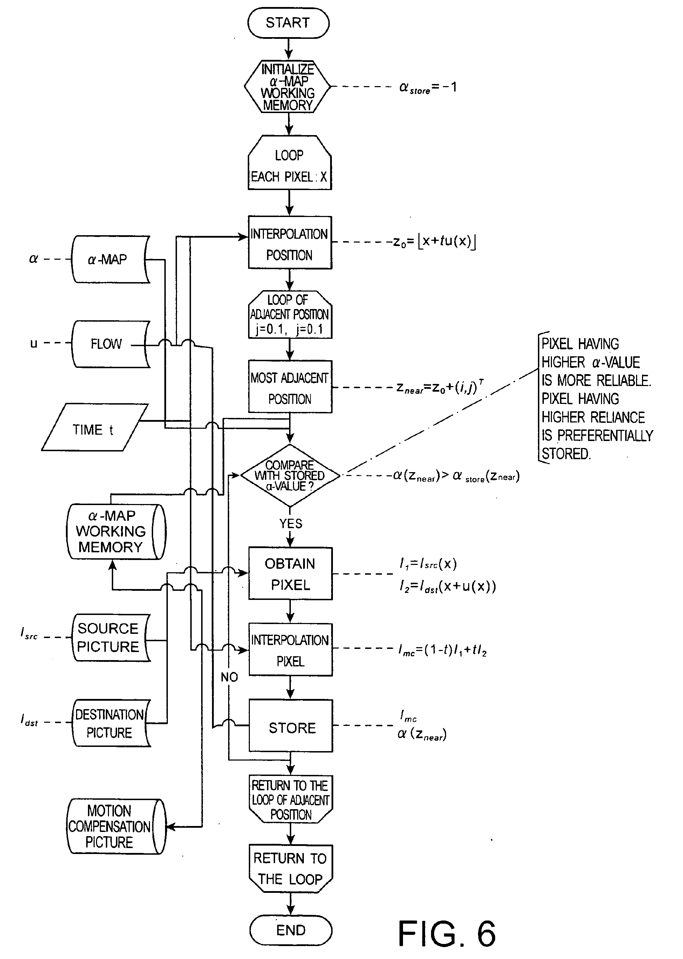

Next, the motion compensation warping unit 20 is explained by referring to a flow chart of Fig.6. The motion compensation warping unit 20 warps a source picture and a destination picture by flow, and generates a motion compensation picture.

A shift method by flow is the same as the alpha-map generation unit 18. A pixel value of a pixel x on the source picture and the destination picture are represented as follows.

$$\mathbf{I1} = \mathbf{I_{src}(x)}$$

$$\mathbf{I2} = \mathbf{I_{dst}(x+u(x))}$$

If a temporal position of an interpolation frame is "0=<t=<1" , a pixel value of the interpolation frame is calculated by temporal weighted average as follows.

$$\mathbf{I_{mc}} = \mathbf{(1-t)I_1 + tI_2}$$

In above equation, "$I_{mc}$" represents a motion compensation picture.

In the same way as the alpha-map generation unit 18, plural pixel values often overlap on the same region of the motion compensation picture by shifting. In this case, one pixel value is preferentially used by comparing the alpha-values.

Furthermore, a region having no pixel values often exists on the motion compensation picture. As to such small region, a pixel value of adjacent regions is assigned by filtering. As to such large region, a pixel value of a corresponding region on the artifact prevention picture is assigned.

(7) The alpha-blending unit 22:

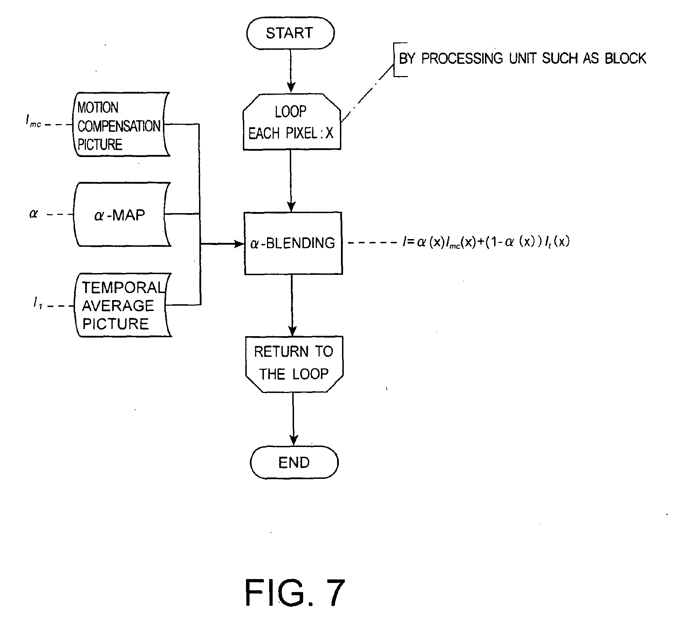

Next, the alpha-blending unit 22 is explained by referring to a flow chart of Fig.7. The alpha-blending unit 22 compounds the motion compensation picture and the artifact prevention picture according to the alpha-map. This composition is a general alpha-blending method as follows.

$$\mathbf{I} = \mathbf{\alpha(x)I_{mc}(x)+(1-(x))I_t(x)}$$

By determining an interpolated pixel value using the above equation, a new (interpolation) frame to be interpolated between the source picture and the destination picture is generated.

(8) Effect:

As to the frame interpolation apparatus 10 of the first embodiment, in case of inputting a motion picture, a new frame is interpolated between a source frame and a destination frame. By increasing the number of frames per unit time, contents of the motion picture are visually smoothed. Especially, local defects in the frame are removed.

(The second embodiment)

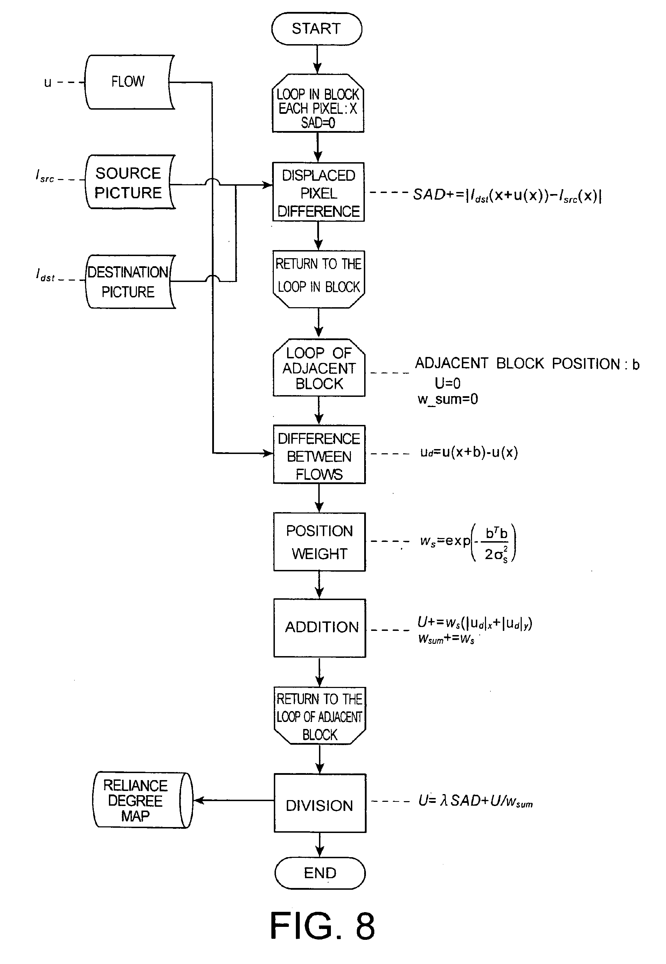

Next, the frame interpolation apparatus 10 of the second embodiment is explained by referring to Fig.8. In the first embodiment, the frame interpolation apparatus 10 calculates distortion energy of each pixel. However, the calculation quantity may become too large. Accordingly, in the second embodiment, the frame interpolation apparatus 10 calculates distortion energy of each block. Except for a distortion energy calculation unit 14 in Fig. 1, a function of each unit of the frame interpolation apparatus 10 of the second embodiment is the same as the first embodiment, and its explanation is omitted.

The distortion energy calculation unit 14 calculates distortion energy by unit of block. A source picture is divided into plural blocks each having a rectangular region as follows.

$$B(i) = \{i+(x,y)^T | 0 = \langle x \langle M1, \ 0 = \langle y \langle M2\}$$

$i \in X$: left upper pixel of block
$M_1$, $M_2$: x size and y size of block
$X \subset \Lambda^2$: frame

Difference energy is calculated by SAD (Sum of Absolute Difference) of each block as follows.

$$SAD(i) = \sum_{b \in B(i)} |I_{dst}(i+b+u(i+b))-I_{src}(i+b)| \qquad (9)$$

In equation (9), sum of absolute difference is used. However, sum of square may be used.
Smoothing energy is calculated as a difference between a flow of a notice block and flows of adjacent blocks as follows.

$$V(i,j) = \|u(j)-u(i)\|^2 \qquad (10)$$

In equation (10), a sum of absolute differences may be used. The smoothing energy is calculated as a sum of the difference for all the adjacent blocks. By linearly connecting equations (9) and (10), distortion energy is defined as follows.

$$U(i) = \lambda SAD(i) + \sum_{j \in N} V(i,i+j) \qquad (11)$$

The distortion energy of equation (11) is calculated by unit of block. In equation (11), "N" represents the number of adjacent blocks (for example, adjacent four blocks).

(The third embodiment)

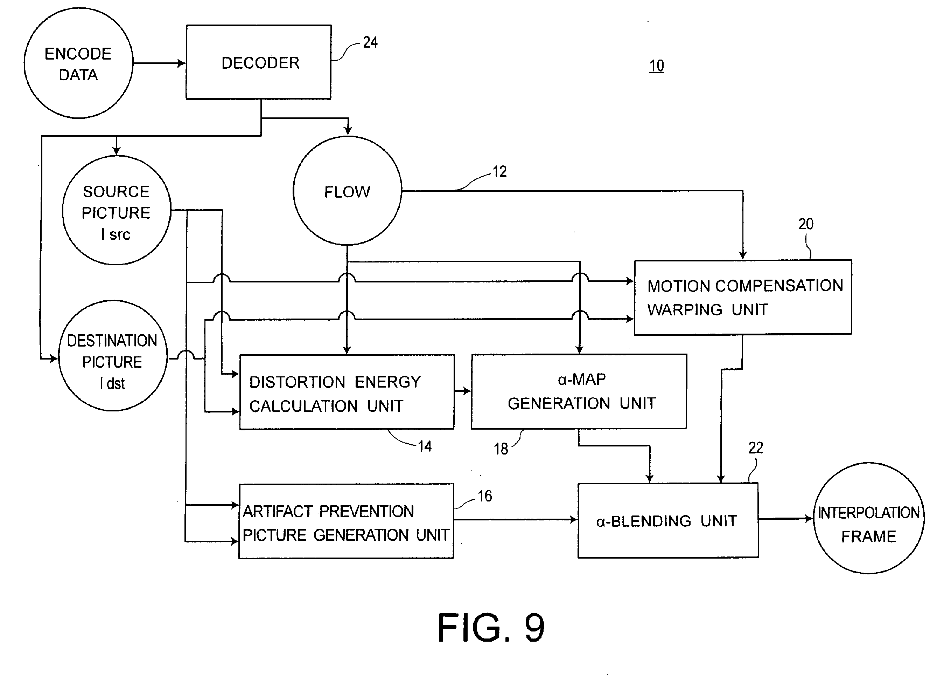

Next, the frame interpolation apparatus 10 of the third embodiment is explained by referring to Fig.9. In the third embodiment, as shown in Fig.9, an encoded picture signal is transmitted. A decoder 24 decodes the encoded picture signal, and an interpolation frame is generated using the decoded picture signal. In this case, the motion estimation unit 12 does not calculate a flow. The decoder 24 calculates a flow by decoding the encoded picture, and this flow is directly used to generate the interpolation frame.

(The fourth embodiment)

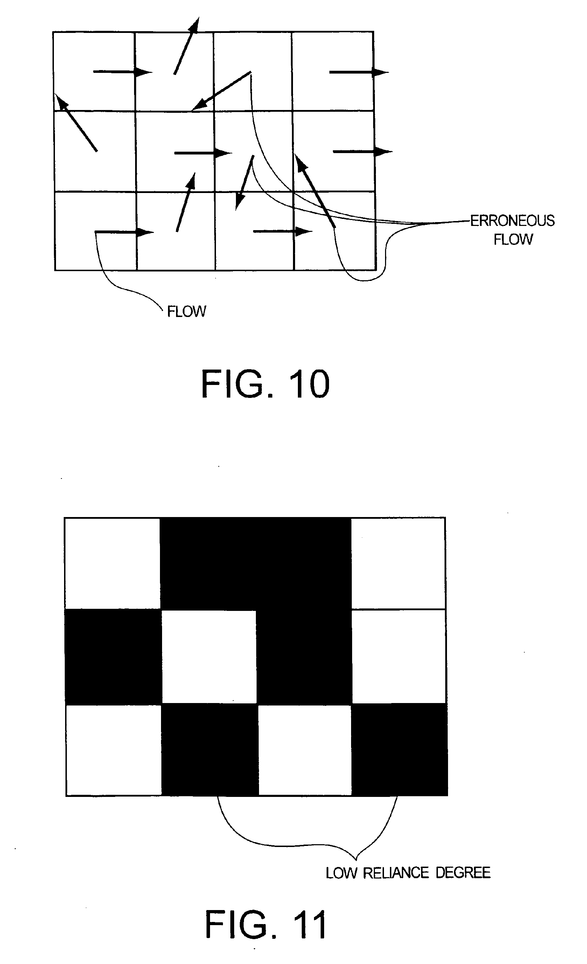

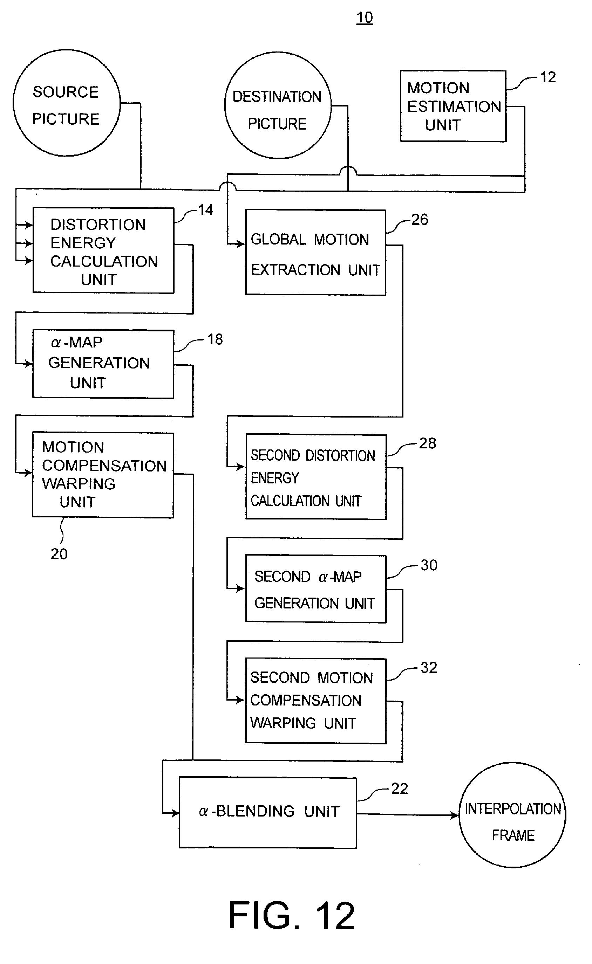

Next, the frame interpolation apparatus 10 of the fourth embodiment is explained by referring to Figs. 10~14. In the first embodiment, artifact of the interpolation frame caused by an erroneous flow is prevented with alpha-blending. However, as shown in Fig. 10, if an estimation result of flows has low accuracy (many erroneous flows are included), a problem occurs. Fig. 11 shows an alpha-map created from the flows in Fig.10. In Fig.11, alpha-values corresponding to the erroneous flows are low (black area in Fig.11).

In the first embodiment, a temporal weighted average picture is used as the artifact prevention picture. As shown in Fig.11, if a first area having high alpha-value and a second area having low alpha-value mix in the alpha-map (especially, in the same motion region), a motion compensation picture and a temporal weighted average picture mix in the interpolation picture. As a result, the mixed region is visually recognized as a flicker.

However, a flow of an area having low alpha-value has a low-reliability, and the motion compensation picture cannot be used as it is. On the other hand, even if the temporal weighted average picture is mixed with the motion compensation picture, the flicker in the interpolation picture is viewed. This problem is caused by a difference for motion between the motion compensation picture and the temporal weighted average picture. Accordingly, a picture similar to the motion compensation picture (than the temporal weighted average picture) is better to use for alpha-blending as the artifact prevention picture.

In this case, the temporal weighted average picture may be suddenly inserted onto the interpolation picture in which almost region has the same motion. The same motion is extracted as a global motion from the source picture and the destination picture. The global motion is a leading motion of almost region in the picture. Accordingly, a picture to compensate a low reliance region is generated using the global motion and used for alpha-blending. The temporal weighted average picture is also regarded as a static global motion. As a result, the global motion is considered as extension from the alpha-blending.

(1) Summary of the frame interpolation apparatus 10:

The frame interpolation apparatus 10 of the fourth embodiment is explained by referring to Fig .12 . As shown in Fig .12 , the frame interpolation apparatus 10 includes the motion estimation unit 12, the distortion energy calculation unit 14, the alpha-map generation unit 18, the motion compensation warping unit 20, the alpha-blending unit 22, a global motion extraction unit 26, a second distortion energy calculation unit 28, a second alpha-map generation unit 30, and a second motion compensation warping unit 32.

The fourth embodiment is basically an extension of alpha-blending and the same as the first embodiment. Accordingly, units different from the first embodiment in the frame interpolation apparatus of the fourth embodiment are explained. In the fourth embodiment, the following descriptions are used.

lattice space: $\Lambda^2$
frame: $x \subset \Lambda^2$
point in frame: $x \in X$
block unit: $i \in \Lambda^2$
i-th block: $B(i) \subset X$
flow: $u(i) \in R^2$

(2) The global motion extraction unit 26:

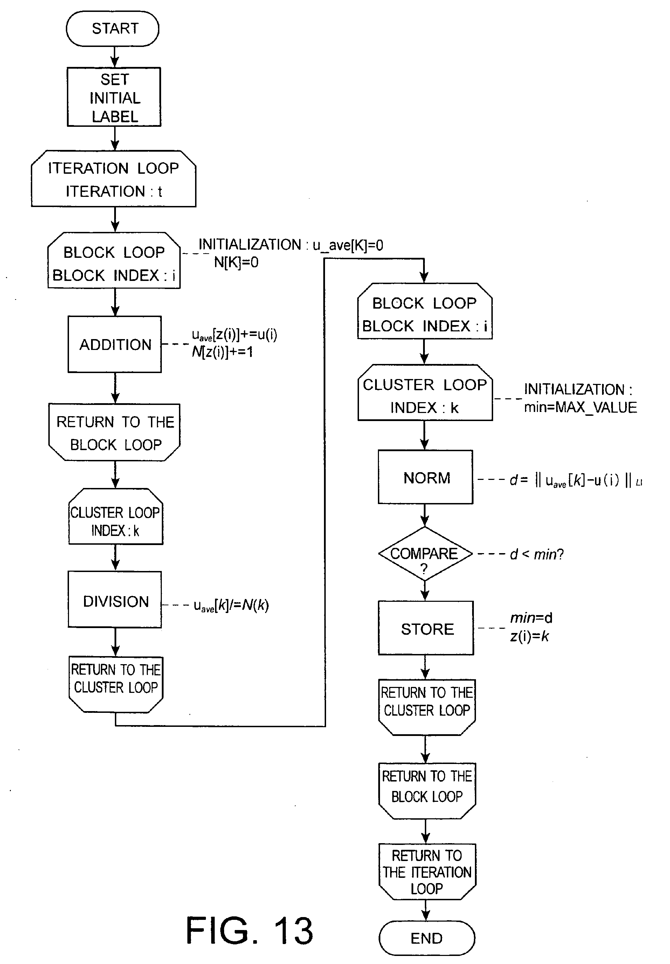

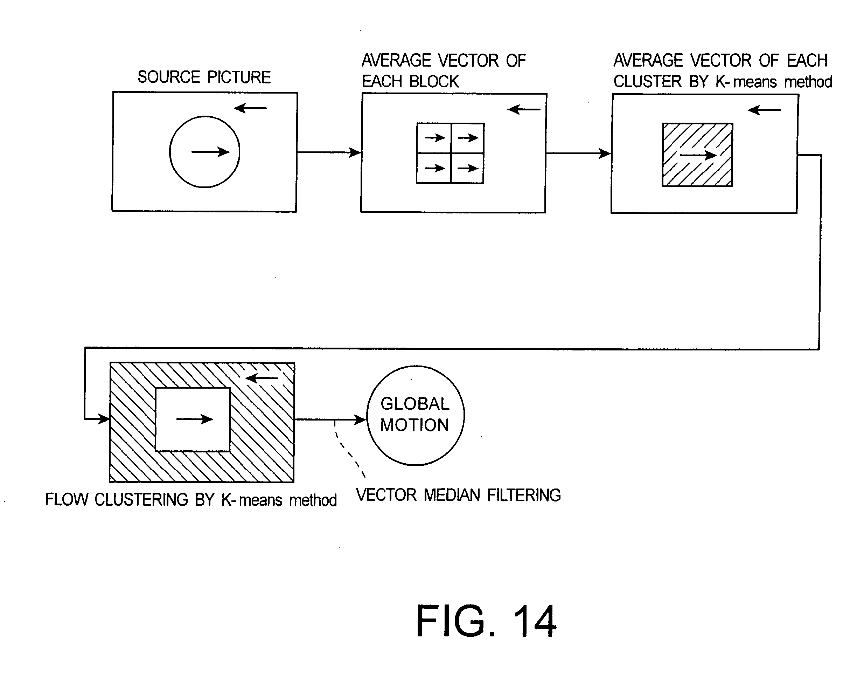

First, the global motion extraction unit 26 is explained by referring to Figs.13 and 14. The global motion is modeled by geometrical transformation from two-dimensional plane to two-dimensional plane. A typical geometrical transformation is affine transformation. The affine transformation represents a parallel motion, a rotation, an enlargement, and a shearing deformation (deformation from a square to a lozenge) . The affine transformation is a popular geometrical transformation, but complicated because its free degree is six. Accordingly, in following explanation, the parallel motion is only applied as geometrical transformation. In this case, the geometrical transformation is represented as two-dimensional flow of one unit, and its free degree is two as follows.

$$\overline{u} = (u,v)^T \qquad (13)$$

This geometrical transformation is determined by calculating a typical flow from some region. The typical flow is calculated as an average value or a median value. A problem that global motions "$u_k$ ($k=1,...K$)" are extracted from a flow field is simply solved by k-means method. The k-means method is an algorithm to cluster the flow field into K units.

$$z(i) \in Z : \textbf{\texttt{label of cluster to which each flow u(i) belongs}} \qquad (14)$$

$z^{(0)}$ ($i$)($\forall i \in \Lambda^2$): initial label

In this case, an average value of each cluster is calculated as follows.

$$\overline{u}_k^{(t)} = \frac{\sum_{u \in U_k^{(t)}} u}{Num(U_k^{(t)})} \qquad (15)$$

$$U_k^{(t)} = \{u(i) \mid z^{(t)}(i) = k, \forall i \in \Lambda^2\}$$

In equation (15), "Num() " is an operator to count the number of elements. Affix "(t)" of right shoulder is iteration.

Next, a cluster having minimum distance from the average is determined and the label is updated as follows.

$$z^{(t+1)}(i) = \arg\min_{k \in \{1,...,K\}} \| \overline{u}_k^{(t)} - u(i) \|_L \qquad (16)$$

As to the k-means method, the equations (14) and (15) are repeated a predetermined number of times. The output value converges at several times of operation, and sometimes converges at one time.

Many methods to set the initial label are considered. For example, the label k ($k=1, ...,K$) may be randomly assigned. In the fourth embodiment, as shown in Fig.14, clustering result (by k-means method) of a source picture is used as the initial label. First, an average in a block of the source picture is calculated as follows.

$$\overline{I}_{src}(i) = \frac{1}{Num(B(i))} \sum_{x \in B(i)} I_{src}(x) \qquad (17)$$

In equation (17), an initial value "$\overline{I}_k(0)$ ($k=1,..., K$)" of average of each cluster is suitably set (for example, a division value that "0~255" is divided by K).

The label is updated by following labeling.

$$z_{src}^{(t)}(i) = \arg\min_{k \in \{1,...,K\}} \| \overline{I}_k^{(t)} - \overline{I}_{src}(i) \|_L \qquad (18)$$

Next, an average value of each cluster is calculated as follows.

$$\overline{I}_k^{(t+1)} = \frac{\sum_{I \in I_k^{(t)}} I}{Num(I_k^{(t)})} \qquad (19)$$

$$I_k^{(l)} = \{\overline{I}_{src}(i) \mid z_{src}^{(l)}(i) = k, \forall i \in \Lambda^2\}$$

The equations (17) and (18) are repeatedly operated several times. A clustering result of an entire region of the source picture is set to the initial value of flow clustering as follows.

$$z^{(0)}(i) = Z_{src}^{(T)}(i), \forall i \in \Lambda^2 \qquad (20)$$

In equation (20), "T" is the number of iteration of k-means method. After calculating a label z(i), a global motion is determined by an average value or a vector median value as follows.

$$\overline{u}_k = \frac{\sum_{u \in U_k} u}{Num(U_k)} \qquad (21)$$

$$U_k = \{u(i) \mid z(i) = k, \forall i \in \Lambda^2\}$$

$$\overline{u}_k = \arg\min_{u \in U_k} \sum_{u_j \in U_k} \| u - u_j \|_L \qquad (22)$$

$$U_k = \{u(i) \mid z(i) = k, \forall i \in \Lambda^2\}$$

(3) The second alpha-map generation unit 30:

The second alpha-map generation unit 30 generates the alpha-map using the global motion $\overline{u}_k(k=1,...,K)$. If all pixels in a frame have the global motion $\overline{u}_k$ (the entire frame has uniform flow), the alpha-map is generated in the same way as in the first embodiment. The alpha-map is represented as $\alpha_k(x)(k=1,..., K)$.
Furthermore, another alpha-map for the temporal weighted average picture is also generated. The global motion is represented as $\overline{u}_k = (0,0)^T$ (i.e., static motion) and the alpha-map $\alpha_t(x)$ is generated.

(4) The second motion compensation warping unit 32:

The second motion compensation warping unit 32 generates a motion compensation warping picture using the global motion $\overline{u}_k$ $(k=1,..., K)$. If all pixels in a frame have the global motion $\overline{u}_k$ (the entire frame has uniform flow), motion compensation warping is executed in the same way as in the first embodiment. The warping result is represented as $I_k(x)(k=1,..., K)$.

(5) The alpha-blending unit 22:

The alpha-blending unit 22 blends (compounds) the motion compensation warping picture $I_m(x)$, the global motion warping picture $I_k(x)(k=1,..., K)$, and the temporal weighted average picture $I_t(x)$. In order to correctly operate alpha-blending, sum of weight coefficients of $I_m(x), I_k(x), I_t(x)$ is designed as "1". This model is represented as follows.

$$I(x) = \alpha(x)I_{mc}(x) + (1-\alpha(x))\left\{\frac{\sum_{k\in\{1,...,K\}}\{\alpha_k(x)I_k(x)\} + \alpha_l(x)I_l(x)}{\cdot\quad\sum_{k\in\{1,...,K\}}\{\alpha_k(x)\} + \alpha_l(x)}\right\} \qquad (23)$$

In equation (23), in case of "K=0", this model is equivalent to the alpha-blending of the first embodiment. Accordingly, the fourth embodiment is regarded as an extension of the alpha-blending. The second term of the right side is weighted average of each alpha-value in the global motion warping picture. In this case, a region having high alpha-value in the global motion warping picture is preferentially used.

(Modification 1)

In the above embodiments, the motion compensation picture and the temporal weighted average picture are respectively weighted-averaged at a temporal position of the interpolation picture. However, when the frame interpolation apparatus is packaged, in case of quantizing a temporal direction between frames, the temporal position of the interpolation picture may not be quantized. In this case, the motion compensation picture and the temporal weighted average picture are weighted-averaged at any position near the temporal position.

(Modification 2)

In the above embodiments, the alpha-map calculation unit 18 shifts the alpha-map at the temporal position of the interpolation frame after generating the alpha-map. However, after shifting the distortion energy of each region to the temporal position of the interpolation frame, the alpha-map may be generated.

**Claims**

1.   An apparatus for generating an interpolation picture between a source picture and a destination picture, comprising:

a motion estimation unit configured to calculate a first motion vector from a source region of the source picture to a destination region of the destination picture, a second motion vector scaled from the first motion vector based on a first temporal distance between the source picture and the interpolation picture, and a third motion vector scaled from the first motion vector based on a second temporal distance between the destination picture and the interpolation picture;
a distortion energy calculation unit configured to calculate a distortion energy of the source region, the distortion energy being reduced when a difference between a pixel value of a pixel of the source region and a pixel value of a corresponding pixel of the destination region is reduced;
a weight calculation unit configured to calculate a first weight of a first interpolation region of the interpolation picture using the distortion energy of the source region, the first interpolation region being pointed from the source region by the second motion vector;
a motion compensation picture generation unit configured to generate a first motion compensation picture by compensating the source region to a temporal position of the interpolation picture using the second motion vector, a second motion compensation picture by compensating the destination region to the temporal position using the third motion vector, and a third motion compensation picture by averaging the first motion compensation picture and the second motion compensation picture with the first temporal distance and the second temporal distance;
an artifact prevention picture generation unit configured to generate an artifact prevention picture selected from the source picture, the destination picture, and a temporal weighted average picture, the temporal weighted average picture being generated by averaging the source picture and the destination picture with the first temporal distance and the second temporal distance; and
a picture interpolation unit configured to generate a second interpolation region of the interpolation picture by averaging a region of the third motion compensation picture and a region of the artifact prevention picture, each corresponding to the second interpolation region with the first weight.

2.   The apparatus according to claim 1,
wherein the distortion energy calculation unit calculates a distortion energy of regions adjacent to the source region, and averages the distortion energy of the source region and the distortion energy of the adjacent regions with a second weight.

3. The apparatus according to claim 2,
   wherein the second weight of the distortion energy of the adjacent regions is smaller when a difference between a pixel value of a pixel of the source region and a pixel value of a corresponding pixel of the adjacent regions is larger.

4. The apparatus according to claim 1,
   wherein the distortion energy calculation unit calculates a motion vector of regions adjacent to the source region, calculates a smoothing energy using a difference between the motion vector of the source region and the motion vector of the adjacent regions, and adds the smoothing energy to the distortion energy.

5. The apparatus according to claim 1,
   wherein the distortion energy calculation unit calculates a motion vector of regions adjacent to the source region, calculates a smoothing energy using a difference between the motion vector of the source region and the motion vector of the adjacent regions, and averages the distortion energy and the smoothing energy with a third weight.

6. The apparatus according to claim 5,
   wherein the third weight of the smoothing energy is smaller when a difference between a pixel value of a pixel of the source region and a pixel value of a corresponding pixel of the adjacent regions is larger.

7. The apparatus according to claim 1,
   wherein the distortion energy corresponds to the first weight one to one, and
   wherein the weight calculation unit converts the distortion energy using a monotonic decrement function that the first weight changes from "0" to "1".

8. An apparatus for generating an interpolation picture between a source picture and a destination picture, comprising:

   a motion estimation unit configured to calculate a first motion vector from a source region of the source picture to a destination region of the destination picture, a second motion vector scaled from the first motion vector based on a first temporal distance between the source picture and the interpolation picture, and a third motion vector scaled from the first motion vector based on a second temporal distance between the destination picture and the interpolation picture;
   a distortion energy calculation unit configured to calculate a distortion energy of the source region, the distortion energy being smaller when a difference between a pixel value of a pixel of the source region and a pixel value of a corresponding pixel of the destination region is smaller;
   a weight calculation unit configured to calculate a first weight of a first interpolation region of the interpolation picture using the distortion energy of the source region, the first interpolation region being pointed from the source region by the second motion vector;
   a motion compensation picture generation unit configured to generate a first motion compensation picture by compensating the source region to a temporal position of the interpolation picture using the second motion vector, a second motion compensation picture by compensating the destination region to the temporal position using the third motion vector, and a third motion compensation picture by averaging the first motion compensation picture and the second motion compensation picture with the first temporal distance and the second temporal distance;
   an artifact prevention picture generation unit configured to generate an artifact prevention picture using a global motion vector of a vector extraction region of the source picture, the global motion vector representing geometrical transformation from the source picture to the destination picture; and
   a picture interpolation unit configured to generate a second interpolation region of the interpolation picture by averaging a region of the third motion compensation picture and a region of the artifact prevention picture, each corresponding to the second interpolation region with the first weight.

9. The apparatus according to claim 8,
   wherein the distortion energy calculation unit calculates a distortion energy of regions adjacent to the source region, and averages the distortion energy of the source region and the distortion energy of the adjacent regions with a second weight.

10. The apparatus according to claim 9,

wherein the second weight of the distortion energy of the adjacent regions is smaller when a difference between a pixel value of a pixel of the source region and a pixel value of a corresponding pixel of the adjacent regions is larger.

11. The apparatus according to claim 8,
   wherein the distortion energy calculation unit calculates a motion vector of regions adjacent to the source region, calculates a smoothing energy using a difference between the motion vector of the source region and the motion vector of the adjacent regions, and adds the smoothing energy to the distortion energy.

12. The apparatus according to claim 8,
   wherein the distortion energy calculation unit calculates a motion vector of regions adjacent to the source region, calculates a smoothing energy using a difference between the motion vector of the source region and the motion vector of the adjacent regions, and averages the distortion energy and the smoothing energy with a third weight.

13. The apparatus according to claim 12,
   wherein the third weight of the smoothing energy is smaller when a difference between a pixel value of a pixel of the source region and a pixel value of a corresponding pixel of the adjacent regions is larger.

14. The apparatus according to claim 8,
   wherein the distortion energy corresponds to the first weight one to one, and
   wherein the weight calculation unit converts the distortion energy using a monotonic decrement function that the first weight changes from "0" to "1".

15. A method for generating an interpolation picture between a source picture and a destination picture, comprising:

   calculating a first motion vector from a source region of the source picture to a destination region of the destination picture, a second motion vector scaled from the first motion vector based on a first temporal distance between the source picture and the interpolation picture, and a third motion vector scaled from the first motion vector based on a second temporal distance between the destination picture and the interpolation picture;
   calculating a distortion energy of the source region, the distortion energy being smaller when a difference between a pixel value of a pixel of the source region and a pixel value of a corresponding pixel of the destination region is smaller;
   calculating a first weight of a first interpolation region of the interpolation picture using the distortion energy of the source region, the first interpolation region being pointed from the source region by the second motion vector;
   generating a first motion compensation picture by compensating the source region to a temporal position of the interpolation picture using the second motion vector, a second motion compensation picture by compensating the destination region to the temporal position using the third motion vector, and a third motion compensation picture by averaging the first motion compensation picture and the second motion compensation picture with the first temporal distance and the second temporal distance;
   generating an artifact prevention picture selected from the source picture, the destination picture, and a temporal weighted average picture, the temporal weighted average picture being generated by averaging the source picture and the destination picture with the first temporal distance and the second temporal distance; and
   generating a second interpolation region of the interpolation picture by averaging a region of the third motion compensation picture and a region of the artifact prevention picture, each corresponding to the second interpolation region with the first weight.

16. A method for generating an interpolation picture between a source picture and a destination picture, comprising:

   calculating a first motion vector from a source region of the source picture to a destination region of the destination picture, a second motion vector scaled from the first motion vector based on a first temporal distance between the source picture and the interpolation picture, and a third motion vector scaled from the first motion vector based on a second temporal distance between the destination picture and the interpolation picture;
   calculating a distortion energy of the source region, the distortion energy being smaller when a difference between a pixel value of a pixel of the source region and a pixel value of a corresponding pixel of the destination region is smaller;
   calculating a first weight of a first interpolation region of the interpolation picture using the distortion energy of the source region, the first interpolation region being pointed from the source region by the second motion vector;
   generating a first motion compensation picture by compensating the source region to a temporal position of the interpolation picture using the second motion vector, a second motion compensation picture by compensating the destination region to the temporal position using the third motion vector, and a third motion compensation picture by averaging the first motion compensation picture and the second motion compensation picture with the first temporal distance and the second temporal distance;

generating an artifact prevention picture using a global motion vector of a vector extraction region of the source picture, the global motion vector representing geometrical transformation from the source picture to the destination picture; and

generating a second interpolation region of the interpolation picture by averaging a region of the third motion compensation picture and a region of the artifact prevention picture, each corresponding to the second interpolation region with the first weight.

FIG. 1

FIG. 2

START

FLOW — $u$

SOURCE PICTURE — $I_{src}$

DESTINATION PICTURE — $I_{dst}$

LOOP EACH PIXEL : X

CONVOLUTION LOOP — — — — ADJACENT PIXEL : S / DISTORTION ENERGY : U / WEIGHTED SUM : W_SUM

DISPLACED PIXEL DIFFERENCE — — — — $dpd = I_{dst}(x+s+u(x+s)) - I_{src}(x+s)$

DIFFERENCE BETWEEN FLOWS — — — — $u_d = u(x+s) - u(x)$

DIFFERENCE BETWEEN PIXELS — — — — $I_d = I_{src}(x+s) - I_{src}(x)$

POSITION WEIGHT — — — — $w_s = \exp\left(-\dfrac{s^T s}{2\sigma_s^2}\right)$

PIXEL WEIGHT — — — — $w_l = \exp\left(-\dfrac{I_d^2}{2\sigma_l^2}\right)$

WEIGHT — — — — $w = w_s w_l$

ADDITION — — — — $U {+}{=} w(\lambda\,|dpd| + |u_d|_x + |u_d|_y)$ / $w_{sum} {+}{=} w$

DISTORTION ENERGY MAP

DIVISION — — — — $U = U / w_{sum}$

RETURN TO THE CONVOLUTION LOOP

RETURN TO THE LOOP

END

FIG. 3

FIG. 4

FIG. 5

FIG. 6

START

BY PROCESSING UNIT SUCH AS BLOCK

$I_{mc}$ -- MOTION COMPENSATION PICTURE

LOOP EACH PIXEL : X

$\alpha$ -- $\alpha$ -MAP

$I_t$ -- TEMPORAL AVERAGE PICTURE

$\alpha$ -BLENDING -- -- -- $I = \alpha(x)I_{mc}(x)+(1-\alpha(x))I_t(x)$

RETURN TO THE LOOP

END

# FIG. 7

23

START

FLOW — u

LOOP IN BLOCK
EACH PIXEL : X
SAD=0

SOURCE
PICTURE — $I_{src}$

DISPLACED
PIXEL
DIFFERENCE — $SAD+=|I_{dst}(x+u(x))-I_{src}(x)|$

DESTINATION
PICTURE — $I_{dst}$

RETURN TO THE
LOOP IN BLOCK

LOOP OF
ADJACENT
BLOCK — ADJACENT BLOCK POSITION : b
U=0
w_sum=0

DIFFERENCE
BETWEEN
FLOWS — $u_d=u(x+b)-u(x)$

POSITION
WEIGHT — $w_s=\exp\left(-\dfrac{b^T b}{2\sigma_s^2}\right)$

ADDITION — $U+=w_s(|u_d|_x+|u_d|_y)$
$w_{sum}+=w_s$

RETURN TO THE
LOOP OF ADJACENT
BLOCK

RELIANCE
DEGREE
MAP

DIVISION — $U=\lambda SAD+U/w_{sum}$

END

# FIG. 8

FIG. 9

ENCODE DATA

DECODER — 24

SOURCE PICTURE I src

DESTINATION PICTURE I dst

FLOW — 12

10

MOTION COMPENSATION WARPING UNIT — 20

DISTORTION ENERGY CALCULATION UNIT — 14

α-MAP GENERATION UNIT — 18

ARTIFACT PREVENTION PICTURE GENERATION UNIT — 16

α-BLENDING UNIT — 22

INTERPOLATION FRAME

ERRONEOUS
FLOW

FLOW

# FIG. 10

LOW RELIANCE DEGREE

# FIG. 11

10

SOURCE
PICTURE

DESTINATION
PICTURE

MOTION
ESTIMATION
UNIT ⌐12

DISTORTION
ENERGY
CALCULATION
UNIT ⌐14

GLOBAL MOTION
EXTRACTION UNIT ⌐26

α-MAP
GENERATION
UNIT ⌐18

MOTION
COMPENSATION
WARPING
UNIT

20

SECOND DISTORTION
ENERGY
CALCULATION UNIT ⌐28

SECOND α-MAP
GENERATION UNIT ⌐30

SECOND MOTION
COMPENSATION
WARPING UNIT ⌐32

α-BLENDING UNIT ⌐22

INTERPOLATION
FRAME

# FIG. 12

START

SET
INITIAL
LABEL

ITERATION LOOP
ITERATION : t

BLOCK LOOP
BLOCK INDEX : i  ---- INITIALIZATION : u_ave[K]=0
                      N[K]=0

ADDITION ---- $u_{ave}[z(i)]+=u(i)$
              $N[z(i)]+=1$

RETURN TO THE
BLOCK LOOP

CLUSTER LOOP
INDEX : k

DIVISION ---- $u_{ave}[k]/=N(k)$

RETURN TO THE
CLUSTER LOOP

BLOCK LOOP
BLOCK INDEX : i

CLUSTER LOOP
INDEX : k  ---- INITIALIZATION :
                min=MAX_VALUE

NORM ---- $d= \| u_{ave}[k]-u(i) \|_{L1}$

COMPARE
?  ---- $d < min$?

STORE ---- $min$=d
           $z(i)=k$

RETURN TO THE
CLUSTER LOOP

RETURN TO THE
BLOCK LOOP

RETURN TO
THE ITERATION
LOOP

END

# FIG. 13

EP 1 978 737 A2

SOURCE PICTURE

AVERAGE VECTOR OF
EACH BLOCK

AVERAGE VECTOR OF EACH
CLUSTER BY K-means method

GLOBAL
MOTION

FLOW CLUSTERING BY K-means method    VECTOR MEDIAN FILTERING

FIG. 14

**REFERENCES CITED IN THE DESCRIPTION**

**Patent documents cited in the description**

- JP 2005006275 A